# FASCICULE DE BREVET EUROPEEN

(11) **EP 1 252 234 B1**
(45) Date de publication et mention de la délivrance du brevet: **18.01.2006**
(21) Numéro de dépôt: 00993176.7
(22) Date de dépôt: 23.11.2000
(51) Int. Cl.: C08L 67/02, C08L 51/04, C08L 69/00, C08L 23/08

(54) **POLYESTERS THERMOPLASTIQUES A PROPRIETES CHOC AMELIOREES ET COMPOSITIONS DE MODIFIANTS CHOC**
THERMOPLASTISCHE POLYESTERHARZE MIT VERBESSERTEN SCHLAGZÄHIGKEITSEIGENSCHAFTEN UND SCHLAGZÄH-MODIFIZIERENDE ZUSAMMENSETZUNGEN
THERMOPLASTIC POLYESTERS WITH IMPROVED SHOCK-PROOF PROPERTIES AND IMPACT MODIFYING COMPOSITION

(30) Priorité: 26.11.1999 FR 9914913
(43) Date de publication de la demande: 30.10.2002
(73) Titulaire: Arkema, 92800 Puteaux (FR)
(72) Inventeur: LACROIX, Christophe, F-27700 Harquency (FR); BOUILLOUX, Alain, F-27300 Bernay (FR); GRANEL, Claude, Philadelphia, PA 19104 (US); TRAN, Michael, Abington, PA 19001 (US)
(86) Numéro de dépôt international: PCT/FR2000/003260
(87) Numéro de publication internationale: WO 2001/038437

(56) Documents cités:
- EP-A- 0 573 680
- EP-A- 0 653 461
- EP-A- 0 838 501

## Description

### [Domaine de l'invention]

La présente invention concerne des polyesters thermoplastiques à propriétés choc améliorées et des compositions de modifiants choc.

Les polyesters thermoplastiques tels que le PBT(polybutylène téréphtalate) et le PET (polyéthylène téréphtalate) possèdent d'excellentes propriétés de stabilité dimensionnelle, de résistance thermique ou de résistance chimique, utilisées dans les domaines électriques, électroniques ou automobiles. Cependant, à haute température, au cours des opérations de transformation, une diminution du poids moléculaire du polymère peut survenir conduisant à une diminution des propriétés de résistance aux chocs. De plus, les polyesters ont de mauvaises propriétés de résistance à la rupture pour des pièces entaillées.

La présente invention fournit des polyesters thermoplastiques dans lesquels on a ajouté une composition de modifiants choc pour obtenir des propriétés de résistance aux chocs améliorées dont la résilience à basse température. La présente invention concerne aussi cette composition de modifiants chocs qu'on additionne aux polyesters pour en améliorer les propriétés chocs. Ces compositions de modifiants permettent d'atteindre des propriétés chocs supérieures à celles obtenues avec chacun des composés pris séparément.

### [L'art antérieur]

Le brevet US 4,753,890 (= EP 174 343) décrit des polyesters tels que par exemple du polyéthylène téréphtalate (PET) ou du polybutylène téréphtalate (PBT) modifiés par des copolymères de l'éthylène, d'un (méth)acrylate d'alkyle et du (méth)acrylate de glycidyle.

Le brevet EP 737 715 décrit des PBT modifiés par un mélange d'un copolymère éthylène - methacrylate de methyle - methacrylate de glycidyle et d'un copolymère de type coeur-écorce (designé aussi sous le nom de Core-Shell). Ces copolymères de type coeur-écorce désignent de fines particules ayant un coeur en élastomère et une écorce thermoplastique.

Le brevet EP 531 008 décrit des mélanges de PBT et de polycarbonate contenant des core-shell et des copolymères qui sont soit des copolymères éthylène - méthacrylate de glycidyle soit des copolymères éthylène - acétate de vinyle - méthacrylate de glycidyle.

Le brevet US 5 369 154 décrit des mélanges de PET et de polycarbonate contenant quatre modifiants différents : un copolymère comprenant un époxyde, un core-shell, un élastomère de type SBR ou SBS ou EPR et un copolymère du type SAN ou ABS.

Le brevet EP 115 015 décrit du PET ou du PBT contenant du polyéthylène basse densité linéaire (LLDPE), des fibres de verre et éventuellement un core-shell.

Le brevet EP 133 993 décrit du PET contenant un core-shell et un copolymère de l'éthylène avec soit un acrylate d'alkyle soit de l'acide (méth)acrylique.

La demande de brevet japonais JP 01 247 454 A publiée le 3 octobre 1989 décrit du PBT contenant un copolymère éthylène - (méth)acrylate d'alkyle et un copolymère éthylène - méthacrylate de glycidyle.

Les brevets EP 838 501 et EP 511 475 décrivent des compositions semblables à celles de la demande japonaise précédente.

Le brevet EP 803 537 décrit du PET et du polycarbonate contenant un copolymère comprenant du méthacrylate de glycidyle. On mélange d'abord le polycarbonate et le copolymère comprenant du méthacrylate de glycidyle puis on incorpore ce mélange dans le PET.

Le brevet EP 187 650 décrit du PET contenant un core-shell et un copolymère de l'éthylène avec soit l'anhydride maléique soit un acide (méth)acrylique.

### [Le problème technique]

On a vu dans l'art antérieur que les polyesters saturés peuvent avoir leurs propriétés chocs améliorées par l'addition de core-shell. Ces polymères ont une structure particulièrement bien définie où le coeur est constitué d'un polymère à caractère élastomérique et où l'écorce a un caractère thermoplastique. On a vu aussi que l'amélioration des résistances aux chocs peut être obtenue en incorporant en plus une phase dispersée d'un modifiant choc contenant éventuellement des fonctions réactives susceptibles de réagir avec les groupements fonctionnels des polyesters. Cette réactivité permet d'assurer une dispersion fine et homogène du modifiant de même qu'une bonne adhésion. Le core-shell peut lui aussi être fonctionnalisé pour permettre une meilleure adhésion avec la matrice. Cependant, cette réactivité est parfois élevée et peut conduire à une diminution de la fluidité. Cette baisse de fluidité est préjudiciable à l'injection de grandes pièces ou de pièces fines.

On a maintenant trouvé qu'on pouvait améliorer les propriétés chocs des polyesters thermoplastiques en y ajoutant trois sortes de modifiant à savoir : (a) un core-shell, (b) un copolymère éthylène - époxyde insaturé ou éthylène - anhydride d'acide carboxylique insaturé ou leurs mélanges et (c) un copolymère éthylène - (méth)acrytate d'alkyle ou éthylène - acide (méth)acrylique éventuellement neutralisé ou leurs mélanges. Cette modification n'entraîne pas une baisse de la fluidité par comparaison avec l'art antérieur voire l'améliore. Ces modifiants améliorent les propriétés de résistance aux chocs soit à température ambiante soit à basses températures selon le rapport choisi entre les trois composants (a), (b) et (c) comparativement à des compositions rencontrées dans les brevets EP 511 475 et EP 174 343. Ils permettent également d'avoir une meilleure fluidité à l'état fondu du matériau comparativement à des compositions telles que décrit dans EP 737 715.

### [Brève description de l'invention]

La présente invention concerne des compositions de polyesters thermoplastiques comprenant, en poids, le total étant 100% :
- 60 à 99 % de polyester thermoplastique,
- 1 à 40 % de modifiant choc comprenant:
   (a) un copolymère (A) coeur - écorce,
   (b) un copolymère (B) de l'éthylène choisi parmi les copolymères (B1) de l'éthylène et d'un anhydride d'acide carboxylique insaturé, les copolymères (B2) de l'éthylène et d'un époxyde insaturé et leurs mélanges,
   (c) un copolymère (C) choisi parmi les copolymères (C1) de l'éthylène et d'un (méth)acrylate d'alkyle, les copolymères (C2) de l'éthylène et de l'acide (méth)acrylique éventuellement neutralisés et leurs mélanges.

La présente invention concerne aussi une composition de modifiants chocs qu'on peut ajouter dans les polyesters thermoplastiques pour améliorer leurs propriétés chocs et comprenant :
(a) un copolymère (A) coeur - écorce,
(b) un copolymère (B) de l'éthylène choisi parmi les copolymères (B1) de l'éthylène et d'un anhydride d'acide carboxylique insaturé, les copolymères (B2) de l'éthylène et d'un époxyde insaturé et leurs mélanges,
(c) un copolymère (C) choisi parmi les copolymères (C1) de l'éthylène et d'un (méth)acrylate d'alkyle, les copolymères (C2) de l'éthylène et de l'acide (méth)acrylique éventuellement neutralisés et leurs mélanges.

### [Description détaillée de l'invention]

Le terme « MFI » (abréviation de Melt Flow Index) désigne l'indice de fluidité à l'état fondu en g/10 minutes à une température donnée et sous une charge donnée.

Le terme polyester thermoplastique désigne des polymères qui sont des produits saturés de condensation de glycols et d'acides dicarboxyliques ou de leurs dérivés. De préférence, ils comprennent les produits de condensation d'acides dicarboxyliques aromatiques ayant de 8 à 14 atomes de carbone et d'au moins un glycol choisi parmi le groupe constitué du néopentylglycol, du cyclohexanediméthanol et des glycols aliphatiques de formule HO(CH₂)ₙOH dans laquelle n est un entier valant de 2 à 10. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 12 atomes de carbone.

Les polyesters préférés sont le polyéthylène téréphtalate (PET), le poly(1,4-butylène) téréphtalate (PBT), le 1,4-cyclohexylène diméthylène téréphtalate/isophtalate) et d'autres esters dérivés d'acides aromatiques dicarboxyliques tels que l'acide isophtalique, dibenzoïque, naphtalène dicarboxylique, l'acide 4,4'-diphénylènedicarboxylique, l'acide bis(p-carboxyphényl) méthane, l'acide éthylène bis p-benzoïque, l'acide 1-4 tétraméthylène bis(p-oxybenzoïque), l'acide éthylène bis (para oxybenzoïque), l'acide 1,3-triméthylène bis (p-oxybenzoique) et des glycols tels que l'éthylène glycol, le 1,3 triméthylène glycol, le 1,4-tétraméthylèneglycol, le 1,6-hexaméthylène glycol, le 1,3 propylène glycol, le 1,8 octaméthylèneglycol, le 1,10-decaméthylène glycol.

Le MFI de ces polyesters, mesuré à 250°C sous 2,16 kg ou 5 kg (pour le PBT) ou à 275°C sous 2,16 kg (pour le PET), peut varier de 2 à 100 et avantageusement de 10 à 80.

On ne sortirait pas du cadre de l'invention si les polyesters étaient constitués de plusieurs diacides et/ou plusieurs diols. On peut aussi utiliser un mélange de différents polyesters.

On ne sortirait pas du cadre de l'invention si les polyesters contenaient des copolyétheresters. Ces copolyétheresters sont des copolymères à blocs polyesters et blocs polyéther ayant des motifs polyéthers dérivés de polyétherdiols tels que le polyéthylène glycol (PEG), le polypropylène glycol (PPG) ou le polytétraméthylène glycol (PTMG), des motifs diacide carboxylique tels que l'acide téréphtalique et des motifs diols courts allongeurs de chaine tels que le glycol (1,2-éthanediol) ou le 1,4-butanediol. L'enchaînement des polyéthers et des diacides forme les segments souples alors que l'enchaînement du glycol ou du butanediol avec les diacides forme les segments rigides du copolyétherester. Ces copolyétheresters sont des élastomères thermoplastiques. La proportion de ces copolyétheresters peut représenter de 0 à 500 parties pour 100 parties de polyester thermoplastique.

On ne sortirait pas du cadre de l'invention si les polyesters contenaient du polycarbonate. On désigne généralement par polycarbonate les polymères comprenant les motifs suivants : 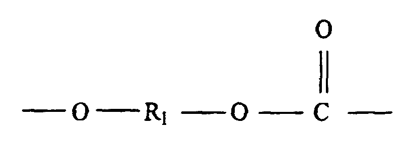 Dans lesquels R₁ est un groupe divalent aliphatique, alicyclique ou aromatique pouvant contenir jusqu'à 8 atomes de carbone. A titre d'exemple de R1, on peut citer l'éthylène, le propylène, le triméthytène, le tétraméthylène, l'hexaméthylène, le dodécaméthylène, le poly-1,4-(2-buténylène), le poly-1,10-(2-éthyldécylène), le 1,3-cyclopentylène, le 1,3-cyclohexylène, le 1,4-cyclohexylène, le m-phénylène, le p-phénylène, le 4,4'-biphénylène, le 2,2-bis(4-phénylène)propane, le benzène-1,4-diméthylène. Avantageusement au moins 60% des groupes R1 dans le polycarbonate et de préférence tous les groupes R1 sont des aromatiques de formule :

-R₂-Y-R₃

dans laquelle R2 et R3 sont des radicaux aromatiques monocycliques divalents et Y est un radical de liaison comprenant un ou deux atomes séparant R2 et R3. Les valences libres sont généralement en position méta ou para par rapport à Y. R2 et R3 peuvent être des phénylènes substitués ou non substitués; on peut citer comme substituants : des alkyles, des alkényles, des halogènes, des nitro et des alkoxy. On préfère les phénylènes non substitués, ils peuvent être ensemble ou séparément méta ou para et sont de préférence para. Le radical de liaison Y est de préférence tel qu'un atome sépare R2 et R3 et est de préférence un radical hydrocarboné tel que le méthylène, le cyclohéxylméthylène, le 2-[2,2,1]bicycloheptylméthylène, l'éthylène, le 2,2-propylène, le 1,1-(2,2diméthylpropylène), le 1,1-cyclohexylène, le 1,1-cyclopentadécylène, le cyclododécylène, le carbonyle, le radical oxy, le radical thio et le sulfone. De préférence R1 est le 2,2-bis(4-phénylène)propane qui vient du bisphénol A, c'est à dire que Y est l'isopropylidène et R2 et R3 sont chacun le p-phénylène. Avantageusement la viscosité intrinsèque du polycarbonate, mesurée dans le chlorure de méthylène à 25°C, est comprise entre 0,3 et 1 dl/g.

La proportion de polycarbonate peut représenter de 0 à 300 parties pour 100 parties de polyester thermoplastique.

S'agissant du copolymère coeur - écorce (A) ou Core-Shell, abrégé CS par la suite, il se présente sous la forme de fines particules ayant un coeur en élastomère et au moins une écorce thermoplastique. La taille des particules est, en général, comprise entre 50 et 1000 nm et avantageusement comprise entre 100 et 500 nm.

A titre d'exemple de coeur on peut citer les homopolymères de l'isoprène ou du butadiène, les copolymères de l'isoprène avec au plus 30% en moles d'un monomère vinylique et les copolymères du butadiène avec au plus 30% en moles d'un monomère vinylique. Le monomère vinylique peut être le styrène, un alkylstyrène, l'acrylonitrile ou un (méth)acrylate d'alkyle. Une autre famille de coeur est constituée par les homopolymères d'un (méth)acrylate d'alkyle et les copolymères d'un (méth)acrylate d'alkyle avec au plus 30% en moles d'un monomère vinylique. Le (méth)acrylate d'alkyle est avantageusement l'acrylate de butyle. Le monomère vinylique peut être le styrène, un alkylstyrène, l'acrylonitrile, le butadiène ou l'isoprène. Le coeur du copolymère (A) peut être réticulé en tout ou partie. Il suffit d'ajouter des monomères au moins difonctionnels au cours de la préparation du coeur, ces monomères peuvent être choisis parmi les esters poly(méth)acryliques de polyols tels que le di(méth)acrylate de butylène et le triméthylol propane triméthacrylate. D'autres monomères difonctionnels sont par exemple le divinylbenzène, le trivinylbenzène, l'acrylate de vinyle et le méthacrylate de vinyle. On peut aussi réticuler le coeur en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (méth)acrylique et le méthacrylate de glycidyle.

L'écorce ou les écorces sont des homopolymères du styrène, d'un alkylstyrène ou du méthacrylate de méthyle ou des copolymères comprenant au moins 70% en moles de l'un de ces monomères précédents et au moins un comonomère choisi parmi les autres monomères précédents, l'acétate de vinyle et l'acrylonitrile. L'écorce peut être fonctionnalisée en y introduisant, par greffage ou comme comonomère pendant la polymérisation, des monomères fonctionnels insaturés tels que des anhydrides d'acides carboxyliques insaturés, des acides carboxyliques insaturés et des époxydes insaturés. On peut citer à titre d'exemple l'anhydride maleique, l'acide (méth)acrylique et le méthacrylate de glycidyle.

A titre d'exemple, on peut citer des copolymères coeur-écorce (A) ayant une écorce en polystyrène et des copolymères coeur-écorce (A) ayant une écorce en PMMA. Il existe aussi des copolymères coeur-écorce (A) ayant deux écorces , l'une en polystyrène et l'autre à l'extérieur en PMMA. Des exemples de copolymère (A) ainsi que leur procédé de préparation sont décrits dans les brevets suivants : US 4 180 494, US 3 808 180, US 4096 202, US 4 260 693, US 3 287 443, US 3 657 391, US 4 299 928, US 3 985 704.

A titre d'exemple, on peut citer des copolymères coeur-écorce (A) ayant un coeur à base d'acrylate d'alkyle ou d'un caoutchouc de polyorganosiloxane ou leur mélange et une écorce à base de polyméthacrylate d'alkyle, ou d'un copolymère styrène-acrylonitrile caractérisé en ce que ledit additif choc comprend de :
a) 70 à 90 % en poids d'un coeur réticulé élastomérique qui se compose :
   1) de 20 à 100 % en poids et, de préférence de 20 à 90 % d'un noyau consistant en un copolymère (1) d'acrylate de n-alkyle dont le groupe alkyle a un nombre de carbone allant de 5 à 12 ou d'un mélange d'acrylate d'alkyle dont le groupe alkyle, linéaire ou ramifié, a un nombre de carbone allant de 2 à 12 ou d'un caoutchouc de polyorganosiloxane, d'un agent réticulant polyfonctionnel possédant dans sa molécule des groupements insaturé dont au moins un est de type vinylique CH₂=C<, et, éventuellement d'un agent de greffage polyfonctionnel possédant dans sa molécule des groupements insaturés dont au moins un est de type allylique CH₂=CH-CH₂-, ledit coeur renfermant une quantité molaire d'agent réticulant et, éventuellement d'agent de greffage allant de 0,05 à 5 %,
   2) de 80 à 0 % en poids et, de préférence de 80 à 10 % d'une enveloppe enveloppant le noyau et consistant en un copolymère (II) d'acrylate de n-alkyle dont le groupe alkyle a un nombre de carbone allant de 4 à 12 ou d'un mélange d'acrylates d'alkyle tels que définis précédemment en 1) et d'un agent de greffage possédant dans sa molécule des groupements insaturés dont au moins un est de type allylique CH₂=CH-CH₂-, ladite enveloppe renfermant une quantité molaire d'agent de greffage allant de 0,05 à 2,5 %.
b) 30 à 10 % en poids d'une écorce greffée sur ledit coeur constitué par un polymère d'un méthacrylate d'alkyle dont le groupe alkyle a un nombre de carbone allant de 1 à 4 ou bien par un copolymère statistique d'un méthacrylate d'alkyle dont le groupe alkyle a un nombre de carbone allant de 1 à 4 et d'un acrylate d'alkyle dont le groupe alkyle a un nombre de carbone allant de 1 à 8, renfermant une quantité molaire d'acrylate d'alkyle allant de 5 à 40 % ou bien constitué par un copolymère styrène-acrylonitrile
Optionnellement, 0,1 à 50% en poids des monomères vinyliques possèdent des groupement fonctionnels.
Ce type de copolymère coeur-écorce est décrit dans la demande de brevet EP-A-776915 et le brevet US-5,773,520 de la demanderesse.

A titre d'exemple, on peut citer des copolymères coeur-écorce (A) constitués (i) de 75 à 80 parties d'un coeur comprenant en moles au moins 93% de butadiène, 5% de styrène et 0,5 à 1 % de divinylbenzène et (ii) de 25 à 20 parties de deux écorces essentiellement de même poids l'une intérieure en polystyrène et l'autre extérieure en PMMA.

Avantageusement le coeur représente 70 à 90% en poids de (A) et l'écorce 30 à 10%.

S'agissant des copolymères (B1) de l'éthylène et d'un anhydride d'acide carboxylique insaturé, ils peuvent être des polyéthylènes greffés par un anhydride d'acide carboxylique insaturé ou des copolymères de l'éthylène et d'un anhydride d'acide carboxylique insaturé qu'on obtient, par exemple, par polymérisation radicalaire.

L'anhydride d'acide carboxylique insaturé peut être choisi, par exemple, parmi les anhydrides maléiques, itaconiques, citraconiques, allylsucciniques, cyclohex-4-ène-1,2-dicarboxyliques, 4-méthylènecyclohex-4-ène-1,2-dicarboxyliques, bicyclo(2,2,1)hept-5-ène-2,3-dicarboxyliques, et x-méthylbicyclo(2,2,1)hept-5-ène-2,2-dicarboxyliques. On utilise avantageuse- ment l'anhydride maléique. On ne sortirait pas du cadre de l'invention en remplaçant tout ou partie de l'anhydride par un acide carboxylique insaturé tel que par exemple l'acide (méth)acrylique.

S'agissant des polyéthylènes sur lesquels on vient greffer l'anhydride d'acide carboxylique insaturé, on entend par polyéthylène des homo- ou copolymères. A titre de comonomères, on peut citer :
- les alpha-oléfines, avantageusement celles ayant de 3 à 30 atomes de carbone; à titre d'exemples d'alpha oléfines, on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, et le 1-triacontène; ces alpha-oléfines peuvent être utilisées seules ou en mélange de deux ou de plus de deux,
- les esters d'acides carboxyliques insaturés tels que, par exemple, les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que, par exemple, l'acétate ou le propionate de vinyle.
- les diènes tels que par exemple le 1,4-hexadiène.
- le polyéthylène peut comprendre plusieurs des comonomères précédents.
Avantageusement, le polyéthylène, qui peut être un mélange de plusieurs polymères, comprend au moins 50% et de préférence 75% (en moles) d'éthylène, sa densité peut être comprise entre 0,86 et 0,98 g/cm³. Le MFI (à 190°C, 2,16 kg) est compris avantageusement entre 0,1 et 1000.
A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.
Le greffage est une opération connue en soi.

S'agissant des copolymères de l'éthylène et de l'anhydride d'acide carboxylique insaturé, c'est-à-dire ceux dans lesquels l'anhydride d'acide carboxylique insaturé n'est pas greffé, il s'agit des copolymères de l'éthylène, de l'anhydride d'acide carboxylique insaturé et éventuellement d'un autre monomère pouvant être choisi parmi les comonomères cités plus haut pour les copolymères de l'éthylène destinés à être greffés.
On utilise avantageusement les copolymères éthylène-anhydride maléique et éthylène - (méth)acrylate d'alkyle - anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI (190°C - 2,16 kg) est compris entre 0,5 et 200. Les (méth)acrylates d'alkyle ont déjà été décrits plus haut. On peut utiliser un mélange de plusieurs copolymères (B1). On peut aussi utiliser un mélange d'un copolymère éthylène-anhydride maléique et d'un copolymère éthylène - (méth)acrylate d'alkyle - anhydride maléique.

Le copolymère (B1) est disponible dans le commerce il est produit par polymérisation radicalaire à une pression pouvant être comprise entre 200 et 2500 bars et est vendu sous forme de granulés.

S'agissant de (B2), les copolymères de l'éthylène et d'un époxyde insaturé peuvent être obtenus par copolymérisation de l'éthylène et d'un époxyde insaturé ou par greffage de l'époxyde insaturé sur le polyéthylène. Le greffage peut être effectué en phase solvant ou sur le polyéthylène en fusion en présence d'un peroxyde. Ces techniques de greffage sont connues en elles-mêmes. Quant à la copolymérisation de l'éthylène et d'un époxyde insaturé, on peut utiliser les procédés dits de polymérisation radicalaire fonctionnant habituellement à des pressions entre 200 et 2500 bars.
A titre d'exemple d'époxydes insaturés, on peut citer :
- les esters et éthers de glycidyle aliphatiques tels que l'allyl glycidyléther, le vinyle glycidyléther, le maléate et l'itaconate de glycidyle, le (méth)acrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidylcarboxylate, le 5-norbornène-2-méthyl-2-glycidylcarboxylate et l'endo cis-bicyclo(2,2,1)-5-heptène-2,3-diglycidyl dicarboxylate.
S'agissant du greffage, le copolymère s'obtient à partir du greffage d'un polyéthylène homo ou copolymère comme décrit pour (B1) ci-dessus sauf qu'on greffe un époxyde au lieu d'un anhydride.
S'agissant d'une copolymérisation, le principe est semblable à celui décrit pour (B1) ci-dessus, sauf qu'on utilise un époxyde. Il peut aussi y avoir d'autres comonomères comme dans le cas de (B1).

Le produit (B2) est avantageusement un copolymère éthylène - (méth)acrylate d'alkyle - époxyde insaturé ou un copolymère éthylène - époxyde insaturé. Avantageusement, il peut contenir jusqu'à 40% en poids de (méth)acrylate d'alkyle, de préférence 5 à 40 % et jusqu'à 10% en poids d'époxyde insaturé, de préférence 0,1 à 8%.

L'époxyde est avantageusement le (méth)acrylate de glycidyle.

Avantageusement, le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est avantageusement de 20 à 35%. Le MFI (à 190°C sous 2,16 kg) est avantageusement compris entre 0,5 et 200.

On peut utiliser un mélange de plusieurs copolymères (82). On peut aussi utiliser un mélange d'un copolymère éthylène - (méth)acrylate d'alkyle - époxyde insaturé et d'un copolymère éthylène - époxyde insaturé.

Ce copolymère (B2) peut être obtenu par polymérisation radicalaire des monomères.

On peut aussi utiliser un mélange des copolymères (B1) et (B2).

S'agissant du copolymère (C1) de l'éthylène et d'un (méth)acrylate d'alkyle, les alkyles peuvent avoir jusqu'à 24 atomes de carbone. Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle. Le MFI (à 190°C, sous 2,16 kg) de ces copolymères est avantageusement compris entre 0,1 et 50. La teneur en (méth)acrylate d'alkyle peut être jusqu'à 40% en poids de (C1). Avantageusement la teneur en (méth)acrylate est comprise entre 5 et 35 % en poids de (C1). Ces copolymères peuvent être fabriqués par polymérisation radicalaire en tube ou autoclave à des pressions comprises entre 300 et 2500 bars.

S'agissant des copolymères (C2) de l'éthylène et de l'acide (méth)acrylique, la teneur en acide (méth)acrylique peut être jusqu'à 10% en moles de (C2) et avantageusement comprise entre 1 et 5%. On ne sortirait pas du cadre de l'invention si (C2) comprenait un (méth)acrylate d'alkyle en proportion pouvant atteindre 40% en poids de (C2). Les fonctions acides peuvent être en tout ou en partie neutralisées par un cation tel que le lithium, le sodium, le potassium, le magnésium, le calcium, le strontium, le zinc et le cadmium. Le MFI (à 190°C, sous 2,16 kg) de ces copolymères est avantageusement compris entre 0,1 et 50. Ces copolymères peuvent être fabriqués par polymérisation radicalaire en tube ou autoclave à des pressions comprises entre 300 et 2500 bars.

On peut aussi utiliser un mélange des copolymères (C1) et (C2).

Avantageusement les constituants choc sont dans les proportions suivantes en poids pour un total de 100% :
(A) 15 à 80%
(B) 5 à 60%
(C) 5 à 80%

Des proportions particulièrement utiles sont les suivantes:

| | | | |
|---|---|---|---|
| A | 20 à 35 | 25 à 35 | 40 à 75 |
| B | 40 à 60 | 5 à 10 | 10 à 35 |
| C | 10à40 | 60 à 70 | 10 à 35 |
| A+B+C | 100 | 100 | 100 |

Avantageusement les compositions de polyesters thermoplastiques de l'invention comprennent pour 100 parties en poids 65 à 95 parties de polyester pour respectivement 35 à 5 parties de modifiant choc.

L'invention concerne aussi une composition de modifiant choc ayant ces proportions.

Les polyesters thermoplastiques de l'invention peuvent aussi comprendre en plus du modifiant choc des agents glissants, des stabilisants thermiques, des agents antibloquants, des antioxydants, des anti U.V. et des charges. Les charges peuvent être des fibres de verre, des ignifugeants, du talc ou de la craie. Ces charges peuvent être comprises dans les modifiants chocs.

Les mélanges du polyester thermoplastique et des modifiants choc sont préparés par les techniques habituelles des polymères thermoplastiques dans des extrudeuses mono ou double vis, des mélangeurs ou des appareils du type Ko malaxeur BUSS®. Le polyester et les constituants du modifiant choc, à savoir les copolymères (A), (B) et (C) peuvent être introduits séparément dans le dispositif mélangeur. Les constituants du modifiant choc peuvent être aussi ajoutés sous forme d'un mélange préparé à l'avance, éventuellement sous forme de mélange maître dans le polyester. On peut ajouter dans ces appareils les additifs tels que les agents glissants, les agents antibloquants, les antioxydants, les anti U.V. et les charges soit tels quels soit sous forme de mélange maître dans le polyester soit encore sous forme de mélange maître avec un ou plusieurs des copolymères (A) à (C). La composition de modifiants choc comprenant (A) à (C) qu'on peut ajouter dans les polyesters est aussi préparée par la technique précédente habituelle de mélange des polymères thermoplastiques.

### [Exemples]

Tous les exemples ont été réalisés avec des compositions comprenant en poids entre 70 à 80% de polyester et entre 30 à 20% de modifiant choc. Le modifiant choc est soit constitué de A, B et C pour les exemples selon l'invention, soit de A et B, soit de B et C, soit de A soit, de B soit encore de C. Le choc CHARPY entaillé est conforme à la norme ISO 179:93 (avec pour unité de mesure le kJ/m2) et le choc IZOD entaillé est mesuré selon la norme ASTM D256 (avec pour unité de mesure la livre-pied/pouce), plus la valeur de résistance au choc mesurée est élevée, meilleure est la résistance au choc.
Les exemples ci-dessous ont été réalisés avec du PBT ou avec du PET en tant que polyester.
- Les exemples suivants ont été réalisés avec des compositions comprenant en poids 80% de PBT et 20% de modifiant choc.
Ces exemples ont été réalisés avec les produits suivants :
**AX8900 :** copolymère éthylène - acrylate de méthyle - méthacrylate de glycidyle(GMA) comprenant en poids 25% d'acrylate et 8% de GMA ayant un MFI de 6 (190°C 2,16 kg). Il est vendu sous la marque LOTADER® ATOFINA.
**AX8930 :** copolymère éthylène - acrylate de méthyle - méthacrylate de glycidyle(GMA) comprenant en poids 25% d'acrylate et 3% de GMA ayant un MFI de 6 (190°C 2,16 kg). Il est vendu sous la marque LOTADER® ATOFINA.
**Lotryl :** copolymère éthylène - acrylate de 2-ethylhexyle comprenant en poids 35% d'acrylate et ayant un MFI de 2 (190°C 2,16 kg).
**E920 :** core-shell de type MBS à coeur essentiellement à base de butadiène et styrène et d'une écorce de PMMA vendu par ATOFINA sous la marque METABLEND®.
**EXL2314** : core-shell acrylique fonctionnalisé époxy vendu par RHOM et HAAS sous la marque PARALOID®.
**PBT :** polybutylène téréphtalate de MFI 20 (à 250°C sous 2,16 kg) vendu sous la marque ULTRADUR® B4500 par BASF.

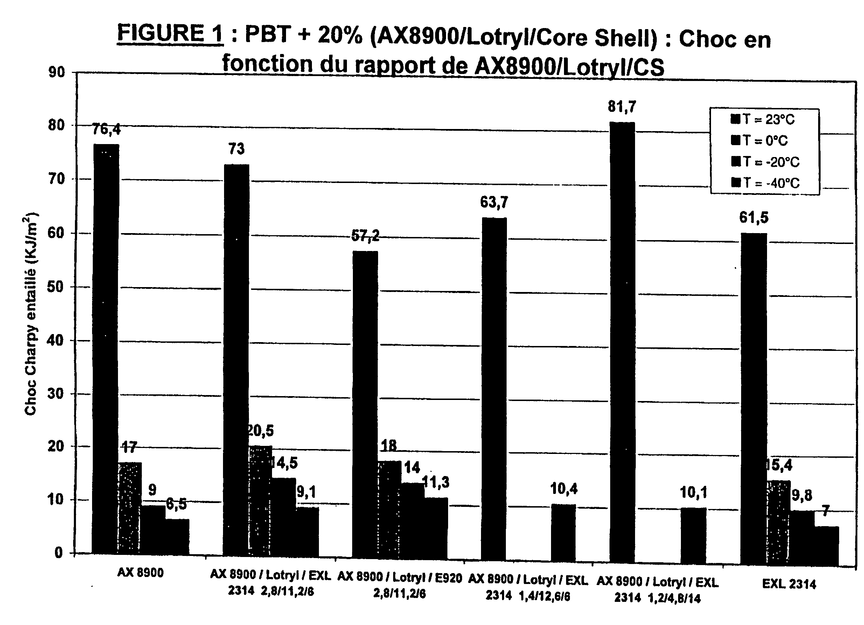

Sur la **FIGURE 1** on a représenté le choc Charpy entaillé pour du PBT contenant soit de l'AX8900 (comparatif), soit du EXL2314 (comparatif), soit simultanément (selon l'invention) de l'AX8900, du Lotryl et un core-shell. Les proportions en poids des constituants du modifiant choc sont sous le format suivant : (AX8900/lotryl/core-shell : 2,8/11,2/6 )(exemple)
Les valeurs de choc sont indiquées à quatre températures différentes pour chaque composition. Les valeurs de la **FIGURE 1** sont aussi représentées sur le **TABLEAU 1** suivant.

**TABLEAU 1**

| Modifiant choc | Choc Charpy entaillé kJ/m2 | | | |
|---|---|---|---|---|
| | T = 23°C | T = 0°C | T = -20°C | T = -40°C |
| AX 8900 | 76,4 | 17 | 9 | 6,5 |
| (AX 8900 / Lotryl / EXL 2314 : 2,8111,2/6) | 73 | 20,5 | 14,5 | 9,1 |
| (AX 8900 / Lotryl / E920 : 2,8/11,2/6) | 57,2 | 18 | 14 | 11,3 |
| (AX 8900 / Lotryl / EXL 2314 : 1,4/12,6/6) | 63,7 | | | 10,4 |
| (AX 8900 / Lotryl / EXL 2314 : 1,2/4,8/14) | 81,7 | | | 10,1 |
| EXL 2314 | 61,5 | 15,4 | 9,8 | 7 |

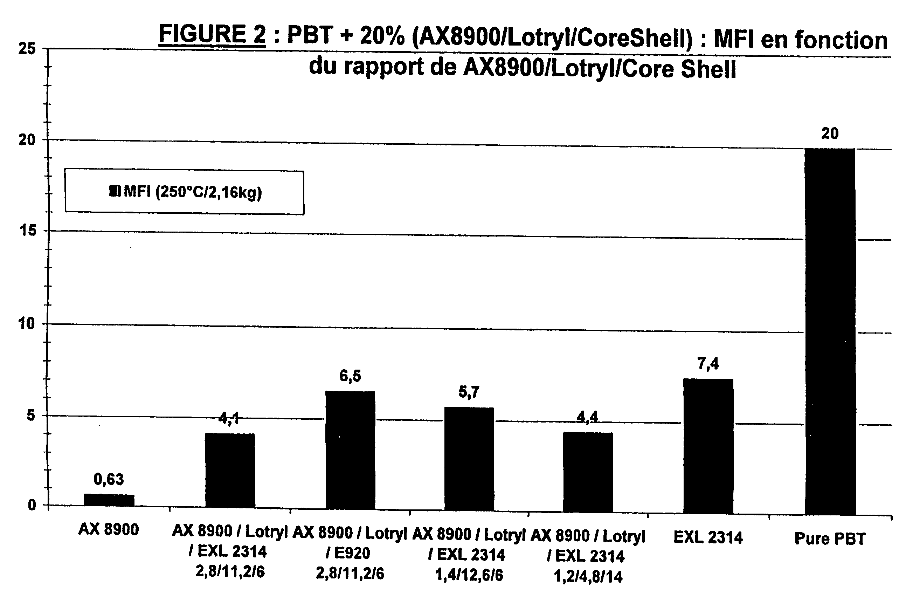

Sur la **FIGURE 2** on a représenté le MFI des compositions précédentes contenant les différents modifiants chocs et en plus le MFI du PBT sans modifiant : "PBT pur". Les valeurs sont aussi représentées sur le **TABLEAU 2** suivant.

**TABLEAU 2**

| MFI (250°C/2,16k g) | COMPOSITION |
|---|---|
| 0,63 | PBT+AX 8900 |
| 4,1 | PBT+ (AX 8900/ / Lotryl / EXL 2314 : 2,8/11,2/6) |
| 6,5 | PBT+ (AX 8900 / Lotryt / E920 : 2,8/11,2/6) |
| 5,7 | PBT+ (AX 8900 / Lotryl / EXL 2314 : 1,4/12,6/6) |
| 4,4 | PBT+ (AX 8900 / Lotryl / EXL 2314 : 1,2/4,8/14) |
| 7,4 | PBT+EXL 2314 |
| 20 | PURE PBT |

On voit clairement que le modifiant de l'invention donne de meilleurs résultats de choc en particulier à froid que l'AX8900 ou l'EXL2314. Le MFI est cependant plus bas qu'avec l'EXL2314 utilisé seul, beaucoup plus élevé qu'avec l'AX8900 seul mais largement suffisant pour l'injection.

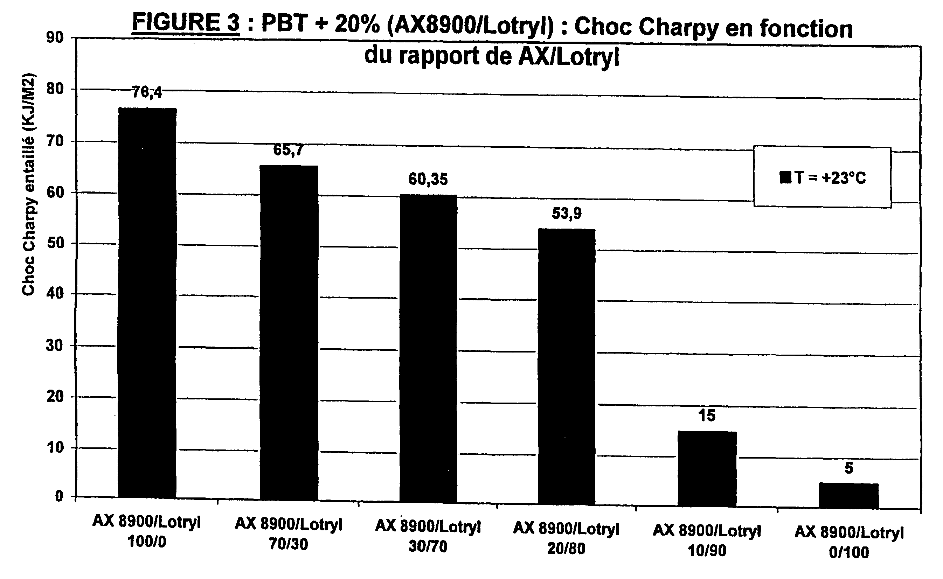

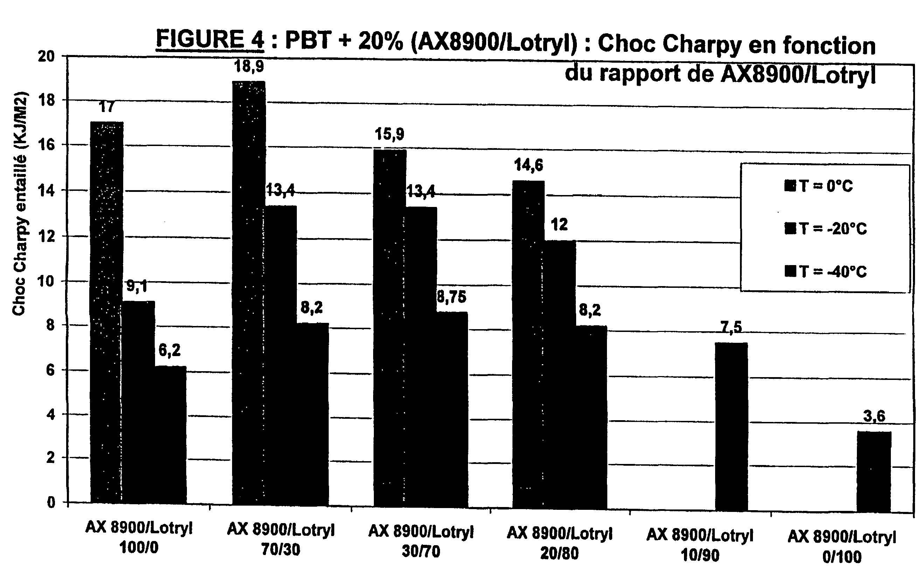

Sur la **FIGURE 3**, on a représenté le choc Charpy entaillé à +23°C pour du PBT contenant du modifiant choc constitué soit d'AX8900, soit de Lotryl soit de leur mélange. Ces compositions ne sont pas conformes à l'invention. Sur la **FIGURE 4**, on a représenté les résistances au choc des mêmes compositions pour d'autres températures. Les valeurs sont aussi sur les **TABLEAUX 3 et 4**.

**TABLEAU 3**

| Proportions AX8900/Lotryl | | Température 23°C Choc Charpy entaillé |
|---|---|---|
| AX 8900 | Lotryl | |
| 100 | 0 | 76,4 |
| 70 | 30 | 65,7 |
| 30 | 70 | 60,35 |
| 20 | 80 | 53,9 |
| 10 | 90 | 15 |
| 0 | 100 | 5 |

**TABLEAU 4**

| PBT + 20%(AX8900+Lotryl) | Choc Charpy entaillé | | |
|---|---|---|---|
| | T = 0°C | T = -20°C | T = -40°C |
| (AX 8900/Lotryl : 100/0) | 17 | 9,1 | 6,2 |
| (AX 8900/Lotryl : 70/30) | 18,9 | 13,4 | 8,2 |
| (AX 8900/Lotryl : 30/70) | 15,9 | 13,4 | 8,75 |
| (AX 8900/Lotryl : 20/80) | 14,6 | 12 | 8,2 |
| (AX 8900/Lotryl: 10/90) | | | 7,5 |
| (AX 8900/Lotryl : 0/100) | | | 3,6 |

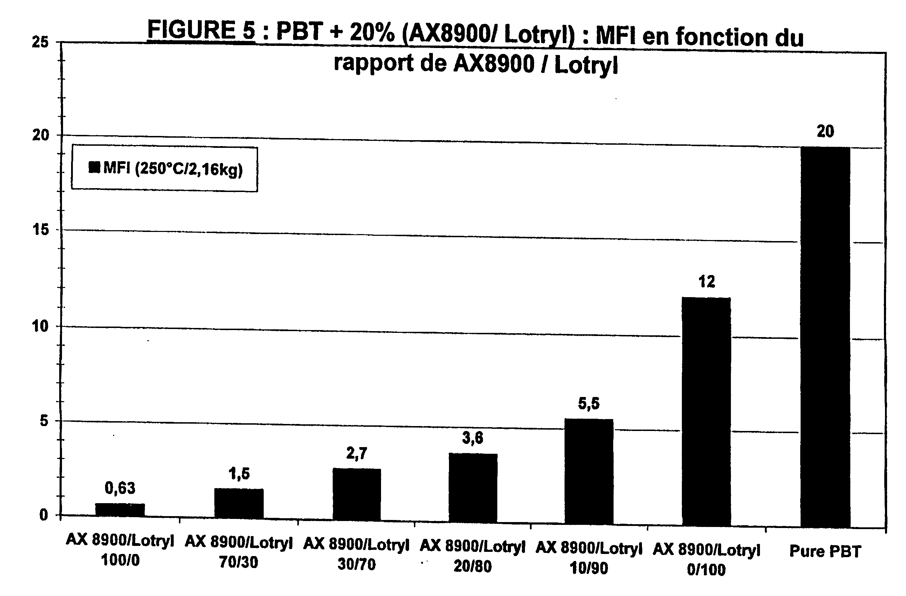

Sur la **FIGURE 5**, on a représenté le MFI des compositions précédentes contenant les différents modifiants chocs et en plus le MFI du PBT sans modifiant : " PBT pur". Les valeurs sont aussi représentées sur le **TABLEAU 5** suivant.

**TABLEAU 5**

| PBT + 20%(AX8900+Lotryl) | MFI (250°C/2,16kg) |
|---|---|
| (AX 8900/Lotryl : 100/0) | 0,63 |
| (AX 8900/Lotryl : 70/30) | 1,5 |
| (AX 8900/Lotryl : 30170) | 2,7 |
| (AX 8900/Lotryl : 20/80) | 3,6 |
| (AX 8900/Lotryl : 10/90) | 5,5 |
| (AX 8900/Lotryl : 0/100) | 12 |
| Pure PBT | 20 |

En comparant les **FIGURES 1** et **4,** on voit qu'avec le modifiant de l'invention, on obtient un meilleur choc en particulier à 0°C et en dessous de 0°C, tout en ayant un MFI plus élevé.

Sur la **FIGURE 6**, on a représenté le choc Charpy entaillé à -40°C pour du PBT contenant du modifiant choc constitué soit d'AX (AX8900 ou AX8930), soit de core-shell (EXL2314 ou E920) soit de leur mélange, ces compositions ne sont pas conformes à l'invention.

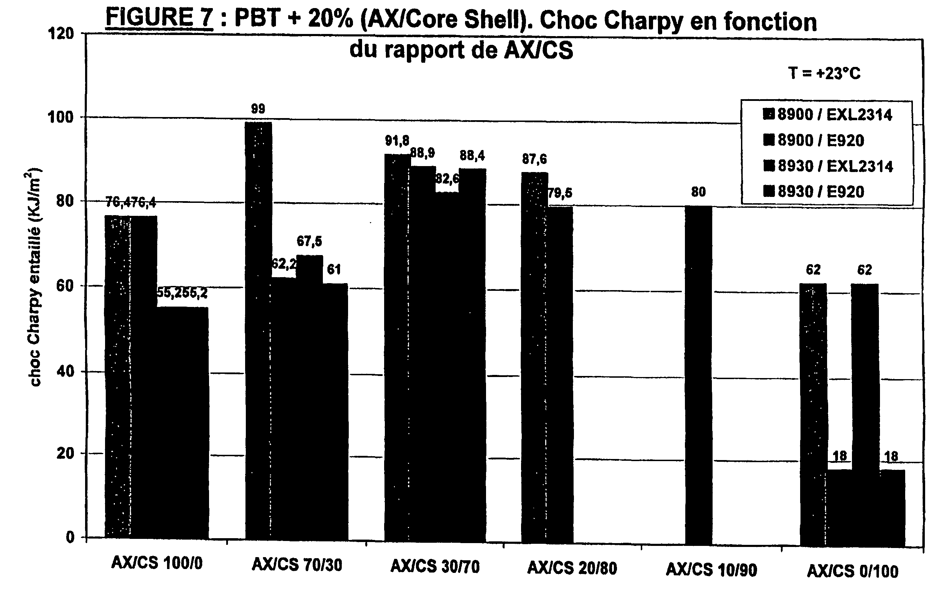

Sur la FIGURE 7, on a représenté les résistances aux chocs de ces mêmes compositions pour +23°C. Sur ces FIGURES 6 et 7, le copolymère à base d'époxyde a été designé par AX et le coeur-écorce ou core-shell par CS. Les valeurs sont aussi sur les **TABLEAU 6 et TABLEAU 7.**

**TABLEAU 6**

| PBT+20%(AX+CS) AX=AX8900 ou AX8930 CS=EXL2314 ou E920 | Choc Charpy entaillé à -40°C | | | |
|---|---|---|---|---|
| | AX8900/EXL2314 | AX8900/E920 | AX8930/EXL2314 | AX89301E920 |
| (AX/CS : 100/0) | 6,2 | 6,2 | 5 | 5 |
| (AX/CS : 70/30) | 9,8 | 10 | 8,8 | 9,9 |
| (AX/CS : 30/70) | 7,8 | 14,75 | 7,1 | 9,8 |
| (AX/CS : 20/80) | 9,2 | 10,25 | | |
| (AX/CS : 10/90) | | 13,8 | | |
| (AX/CS : 0/100) | 6,75 | 8,2 | 6,75 | 8,2 |

**TABLEAU 7**

| PBT+20%(AX+CS) AX=AX8900 ouAX8930 CS=EXL2314 ou E920 | Choc Charpy entaillé à +23°C | | | |
|---|---|---|---|---|
| | AX8900/EXL2314 | AX8900/E920 | AX8930/EXL2314 | AX8930/E920 |
| (AX/CS : 100/0) | 76,4 | 76,4 | 55,2 | 55,2 |
| (AX/CS : 70/30) | 99 | 62,2 | 67,5 | 61 |
| (AX/CS : 30/70) | 91,8 | 88,9 | 82,6 | 88,4 |
| (AX/CS : 20/80) | 87,6 | 79,5 | | |
| (AX/CS : 10/90) | | 80 | | |
| (AX/CS : 0/100) | 62 | 18 | 62 | 18 |

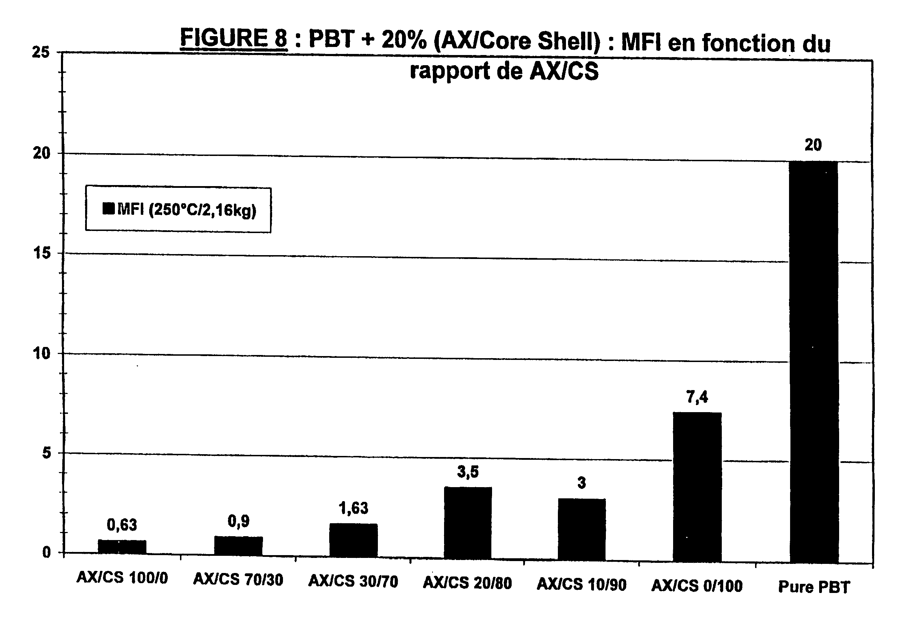

Sur la **FIGURE 8**, on a représenté le MFI des compositions précédentes contenant les différents modifiants chocs et en plus le MFI du PBT sans modifiant : "PBT pur". Les valeurs sont aussi représentées sur le **TABLEAU 8** suivant.

**TABLEAU 8**

| PBT+20%(AX+CS) AX=AX8900 ouAX8930 CS=EXL2314 ou E920 | MFI (250°C/2,16kg) ne change pas avec le type d'AX et CS |
|---|---|
| (AX/CS : 100/0) | 0,63 |
| (AX/CS : 70/30) | 0,9 |
| (AX/CS : 30/70) | 1,63 |
| (AX/CS : 20/80) | 3,5 |
| (AX/CS: 10/90) | 3 |
| (AX/CS : 0/100) | 7,4 |
| Pure PBT | 20 |

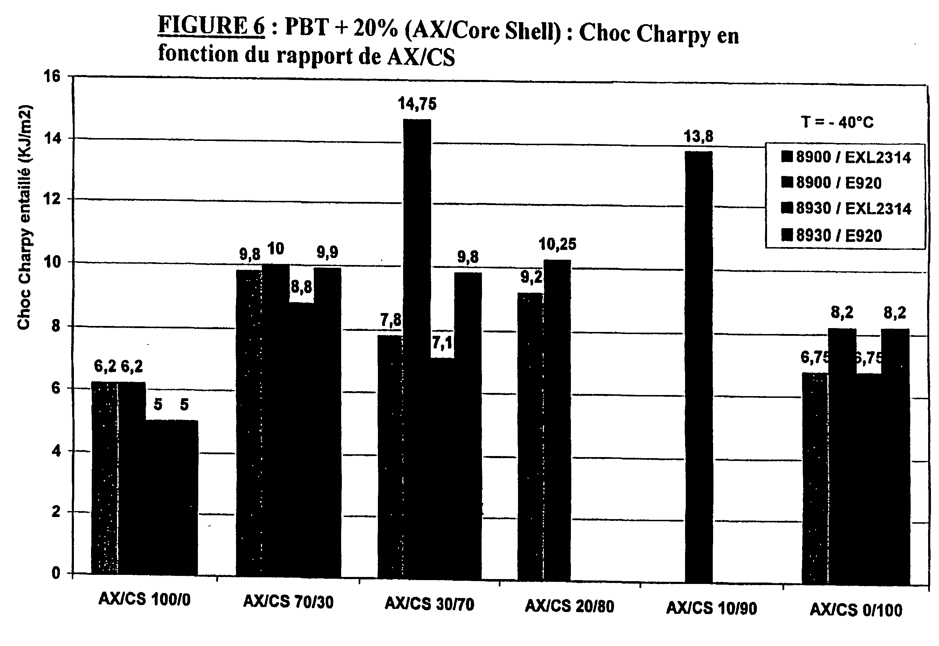

En comparant les **FIGURES 1** et **6,** on constate que le modifiant de l'invention conduit à de meilleures valeurs de choc à froid. En examinant les **FIGURES 2, 5** et **8** , on constate que le MFI des compositions de l'invention dans lesquelles on associe A, B et C est, de façon inattendue, plus élevé par rapport à celui obtenu en associant les copolymères deux à deux : A et B ou B et C.
- Les exemples ci-dessous ont été réalisés avec des compositions en PBT et modifiant choc telles que définis en % en poids dans le **TABLEAU 9**. Ce tableau donnent également d'autres valeurs telles que le MFI des compositions y figurant ainsi que leur résistance au choc en mesurant le choc IZOD entaillé selon la norme définie plus haut à différentes températures T (T=20°C, -20°C, -30°C et -40°C).
   Les compositions exemplifiées ci-dessous ont été réalisés avec les produits suivants :
   **PBT :** polybutylène téréphtalate de MFI 8,4 (à 250°C, sous 5 kg) vendu sous la marque CELANEX ®1600A par TICONA.
   Lotryl : copolymère éthylène-acrylate de butyle comprenant 30% en poids d'acrylate et un MFI de 2 (à 190°C, sous 2,16 kg)
   **AX8900** : composition définie ci-dessus.
   **AM939** : core-shell avec un coeur en acrylate de n-octyle et une écorce en méthacrylate de méthyle dans des proportions de 70 à 90% en poids pour l'acrylate de n-octyle et 10 à 30% pour le méthacrylate de méthyle.
      Au vu des valeurs répertoriées dans le **TABLEAU 9,** on voit clairement que les compositions comprenant le modifiant choc selon l'invention donne de meilleurs résultats de résistance au choc dans une fourchette de température exemplifiée allant de la température ambiante à -40°C, contrairement aux compositions comprenant uniquement en tant que modifiant choc l'AX8900 (comparatif 1) ou l'AM939 (comparatif 2).
      Des essais de résistance au choc ont également été menés avec des compositions non conforme à l'invention comprenant deux modifiants chocs. Ce sont les compositions appelées dans le **TABLEAU 9** comparatifs 3, 5 et 6. Lorsque l'on compare les résultats de résistance au choc obtenus avec de telles compositions et les résultats obtenus avec les compositions comprenant le trio : AM939/lotryl/AX8900, on constate que l'utilisation du modifiant choc selon l'invention donne de très bonnes valeurs de résistance au choc sur la gamme de température exemplifiée, ce qui n'est pas le cas des comparatifs 5 et 6 et également donne de très bons résultats de fluidité à l'état fondu, ce qui n'est pas le cas du comparatif 3.
      On constate donc un effet de synergie entre les protagonistes du trio AM939/lotryl/AX8900 du modifiant choc selon l'invention permettant d'aboutir à un compromis appréciable entre résistance au choc et fluidité des compositions de polyesters thermoplastiques selon l'invention.
- Les exemples ci-dessous ont été réalisés avec des compositions en PET et modifiant choc telles que définis en % en poids dans le **TABLEAU 10.** Ce tableau donnent également d'autres valeurs telles que le MFI des compositions y figurant ainsi que leur résistance au choc en mesurant le choc CHARPY entaillé selon la norme définie plus haut à différentes températures T (T=20°C, 0°C et -30°C).
   Les exemples ci-dessous ont été réalisés avec les produits suivants :
   **PET :** polyéthylène téréphtalate de MFI 40-50 (à 275°C, sous 2,16 kg) vendu sous la marque ESTAPAK®9921 par EASTMAN.
   **AX8900 :** composition définie plus haut.
   **E920** : composition définie plus haut.
   **AM939**: composition définie plus haut.
   **Lotryl** : copolymère éthylène - acrylate de butyle comprenant en poids 30% d'acrylate et ayant un MFI de 2 (à 190°C, sous 2,16 kg).
      Au vu des résultats de MFI et de résistances au choc reportés dans le **TABLEAU 10**, on constate que les compositions comprenant uniquement l'AX8900 (comparatifs 1) et uniquement le duo lotryl/AX8900 (comparatif 4) en tant que modifiant choc offrent une bonne résistance au choc au détriment de la fluidité à l'état fondu qui est médiocre. D'autre part, on constate en étudiant les résultats des compositions comprenant uniquement un Core-Shell (AM939 pour le comparatif 2 ou E920 pour le comparatif 3) comme modifiant choc que ces compositions offrent une résistance au choc faible mais une meilleure viscosité à l'état fondu.
      L'analyse de nos résultats obtenus avec des compositions comprenant le modifiant choc selon l'invention montre clairement une amélioration de la viscosité par rapport aux comparatifs 1 et 4 ainsi qu'une amélioration de la résistance au choc par rapport aux comparatifs 2 et 3.
      Nos résultats démontrent indiscutablement la supériorité de notre modifiant choc par rapport aux modifiants chocs comparatifs et met en lumière l'effet synergique des composés CS/lotryl/AX8900, formant un modifiant choc selon l'invention, sur la fluidité à l'état fondu et la résistance au choc de nos compositions de polyesters thermoplastiques.

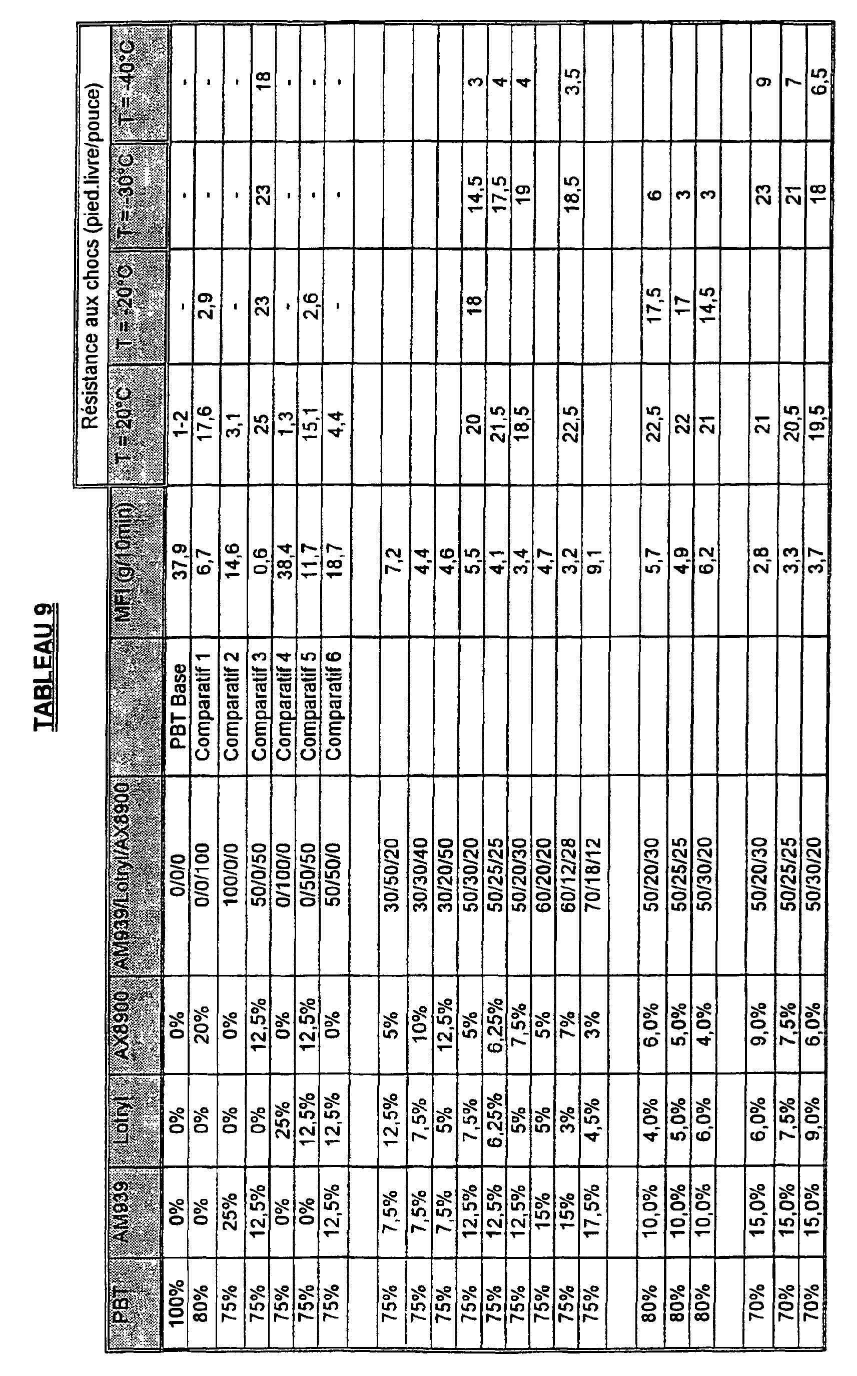

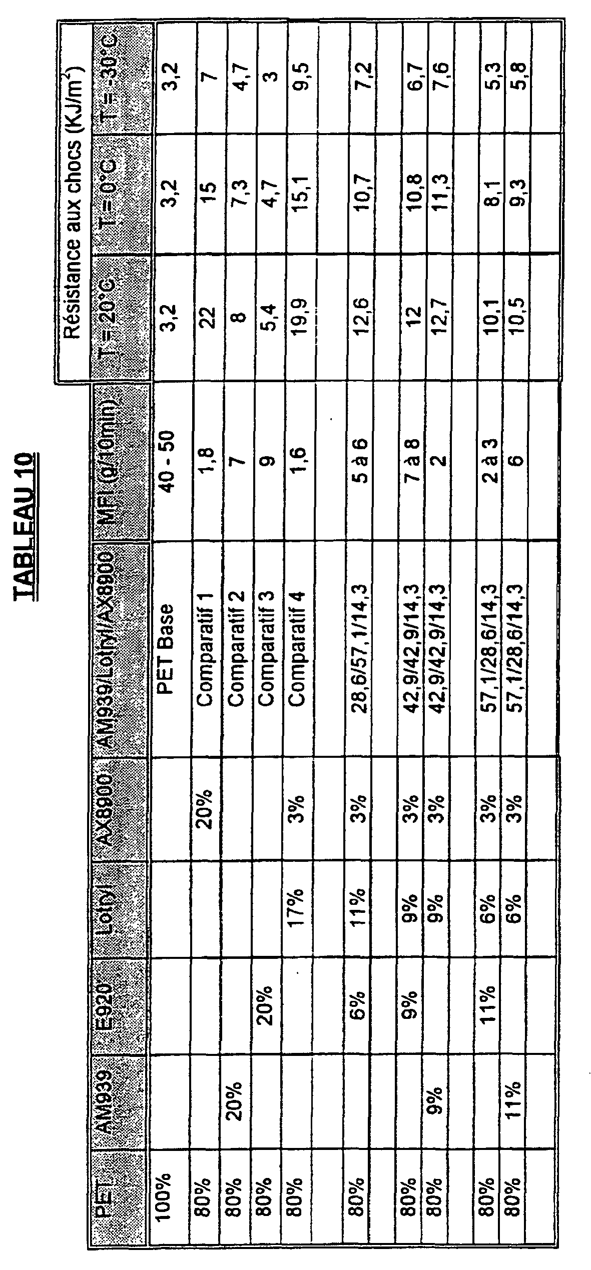

## Revendications

1. Compositions de polyesters thermoplastiques comprenant, en poids, le total étant 100% :
60 à 99 % de polyester thermoplastique,
1 à 40 % de modifiant choc comprenant:
(a) un copolymère (A) coeur - écorce,
(b) un copolymère (B) de l'éthylène choisi parmi les copolymères (B1) de l'éthylène et d'un anhydride d'acide carboxylique insaturé, les copolymères (B2) de l'éthylène et d'un époxyde insaturé et leurs mélanges,
(c) un copolymère (C) choisi parmi les copolymères (C1) de l'éthylène et d'un (méth)acrylate d'alkyle, les copolymères (C2) de l'éthylène et de l'acide (méth)acrylique éventuellement neutralisés et leurs mélanges.

2. Compositions selon la revendication 1 dans laquelle le polyester est choisi parmi le PET et le PBT.

3. Compositions selon la revendication 1 ou 2 comprenant de 0 à 500 parties en poids de copolyétherester pour 100 parties de polyester thermoplastique.

4. Compositions selon l'une quelconque des revendications précédentes comprenant de 0 à 300 parties en poids de polycarbonate pour 100 parties de polyester thermoplastique.

5. Compositions selon l'une quelconque des revendications précédentes dans lesquelles le copolymère (A) comprend un coeur en élastomère, avantageusement en acrylate de n-octyle, et au moins une écorce thermoplastique, avantageusement en méthacrylate de méthyle.

6. Compositions selon l'une quelconque des revendications précédentes dans lesquelles les copolymères (B1) sont des copolymères éthylène - (méth)acrylate d'alkyle - anhydride maléique qui comprennent de 0,2 à 10 % en poids d'anhydride maléique, de 0 à 40 % et de préférence 5 à 40 % en poids de (méth)acrylate d'alkyle.

7. Compositions selon l'une quelconque des revendications 1 à 5 dans lesquelles les copolymères (B2) de l'éthylène et d'un époxyde insaturé sont des copolymères éthylène/(méth)acrylate d'alkylelépoxyde insaturé obtenus par copolymérisation des monomères et contiennent de 0 à 40% en poids de (méth)acrylate d'alkyle et jusqu'à 10% en poids d'époxyde insaturé.

8. Compositions selon l'une quelconque des revendications précédentes comprenant, pour 100 parties en poids, 65 à 95 parties de polyester pour respectivement 35 à 5 parties de modifiant choc.

9. Compositions selon l'une quelconque des revendications précédentes dans lesquelles les proportions en poids de (A), (B) et (C) sont respectivement 15 à 80, 5 à 60 et 5 à 80% et (A)+(B)+(C)=100%.

10. Compositions selon la revendication 9 dans lesquelles les proportions en poids de (A), (B) et (C) sont respectivement 20 à 35, 40 à 60 et 10 à 40% et (A)+(B)+(C)=100%.

11. Compositions selon la revendication 9 dans lesquelles les proportions en poids de (A), (B) et (C) sont respectivement 25 à 35, 5 à 10 et 60 à 70% et (A)+(B)+(C)=100%.

12. Compositions selon la revendication 9 dans lesquelles les proportions en poids de (A), (B) et (C) sont respectivement 40 à 75, 10 à 35 et 10 à 35% et (A)+(B)+(C)=100%.

13. Compositions de modifiants choc comprenant :
(a) un copolymère (A) coeur - écorce,
(b) un copolymère (B) de l'éthylène choisi parmi les copolymères (B1) de l'éthylène et d'un anhydride d'acide carboxylique insaturé, les copolymères (B2) de l'éthylène et d'un époxyde insaturé et leurs mélanges,
(c) un copolymère (C) choisi parmi les copolymères (C1) de l'éthylène et d'un (méth)acrylate d'alkyle, les copolymères (C2) de l'éthylène et de l'acide (méth)acrylique éventuellement neutralisés et leurs mélanges.

14. Compositions selon la revendication 13 dans lesquelles les proportions de (A), (B) et (C) sont celles de l'une quelconque des revendications 9 à 12

## Claims

1. Thermoplastic polyester compositions comprising, by weight, the total being 100%:
60 to 99% of thermoplastic polyester,
1 to 40% of impact modifier comprising:
(a) a core-shell copolymer (A),
(b) an ethylene copolymer (B) chosen from copolymers (B1) of ethylene and of an unsaturated carboxylic acid anhydride, copolymers (B2) of ethylene and of an unsaturated epoxide, and their blends,
(c) a copolymer (C) chosen from copolymers (C1) of ethylene and of an alkyl (meth)acrylate, optionally neutralized copolymers (C2) of ethylene and of (meth)acrylic acid, and their blends.

2. Compositions according to Claim 1, in which the polyester is chosen from PET and PBT.

3. Compositions according to Claim 1 or 2, comprising from 0 to 500 parts by weight of copolyetherester per 100 parts of thermoplastic polyester.

4. Compositions according to any one of the preceding claims, comprising from 0 to 300 parts by weight of polycarbonate per 100 parts of thermoplastic polyester.

5. Compositions according to any one of the preceding claims, in which the copolymer (A) comprises a core made of elastomer, advantageously made of n-octyl acrylate, and at least one thermoplastic shell, advantageously made of methyl methacrylate.

6. Compositions according to any one of the preceding claims, in which the copolymers (B1) are ethylene/alkyl (meth)acrylate/maleic anhydride copolymers which comprise from 0.2 to 10% by weight of maleic anhydride and from 0 to 40%, preferably 5 to 40%, by weight of alkyl (meth)acrylate.

7. Compositions according to any one of Claims 1 to 5, in which the copolymers (B2) of ethylene and of an unsaturated epoxide are ethylene/alkyl (meth)acrylate/unsaturated epoxide copolymers obtained by copolymerization of monomers and comprise from 0 to 40% by weight of alkyl (meth)acrylate and up to 10% by weight of unsaturated epoxide.

8. Compositions according to any one of the preceding claims, comprising, per 100 parts by weight, 65 to 95 parts of polyester for respectively 35 to 5 parts of impact modifier.

9. Compositions according to any one of the preceding claims, in which the proportions by weight of (A), (B) and (C) are respectively 15 to 80, 5 to 60 and 5 to 80% and (A)+(B)+(C) = 100%.

10. Compositions according to Claim 9, in which the proportions by weight of (A), (B) and (C) are respectively 20 to 35, 40 to 60 and 10 to 40% and (A)+(B)+(C) = 100%.

11. Compositions according to Claim 9, in which the proportions by weight of (A), (B) and (C) are respectively 25 to 35, 5 to 10 and 60 to 70% and (A)+(B)+(C) = 100%.

12. Compositions according to Claim 9, in which the proportions by weight of (A), (B) and (C) are respectively 40 to 75, 10 to 35 and 10 to 35% and (A)+(B)+(C) = 100%.

13. Impact modifier compositions comprising:
(a) a core-shell copolymer (A),
(b) an ethylene copolymer (B) chosen from copolymers (B1) of ethylene and of an unsaturated carboxylic acid anhydride, copolymers (B2) of ethylene and of an unsaturated epoxide, and their blends,
(c) a copolymer (C) chosen from copolymers (C1) of ethylene and of an alkyl (meth)acrylate, optionally neutralized copolymers (C2) of ethylene and of (meth)acrylic acid, and their blends.

14. Compositions according to Claim 13, in which the proportions of (A), (B) and (C) are those of any one of Claims 9 to 12.

## Patentansprüche

1. Thermoplastische Polyester enthaltende Zusammensetzungen, enthaltend in Gewichtsprozent, wobei sich die Summe auf 100% beläuft:
60 bis 99% thermoplastischen Polyester,
1 bis 40% Schlagzähigkeitsmodifikator, umfassend:
(a) ein Kern-Schale-Copolymer (A),
(b) ein Ethylen-Copolymer (B), ausgewählt unter Copolymeren (B1) von Ethylen und einem ungesättigten Carbonsäureanhydrid, Copolymeren (B2) von Ethylen und einem ungesättigten Epoxid und Gemischen davon,
(c) ein Copolymer (C), ausgewählt unter Copolymeren (C1) von Ethylen und einem Alkyl(meth)acrylat, gegebenenfalls neutralisierten Copolymeren (C2) von Ethylen und (Meth)acrylsäure und Gemischen davon.

2. Zusammensetzungen nach Anspruch 1, worin der Polyester unter PET und PBT ausgewählt ist.

3. Zusammensetzungen nach Anspruch 1 oder 2, enthaltend 0 bis 500 Gewichtsteile Copolyetherester, bezogen auf 100 Gewichtsteile thermoplastischen Polyester.

4. Zusammensetzungen nach einem der vorhergehenden Ansprüche, enthaltend 0 bis 300 Gewichtsteile Polycarbonat, bezogen auf 100 Gewichtsteile thermoplastischen Polyester.

5. Zusammensetzungen nach einem der vorhergehenden Ansprüche, worin das Copolymer (A) einen Kern aus Elastomer, vorzugsweise n-Octylacrylat, und eine thermoplastische Schale, vorzugsweise aus Methylmethacrylat, enthält.

6. Zusammensetzungen nach einem der vorhergehenden Ansprüche, worin es sich bei den Copolymeren (B1) um Ethylen-Alkyl(meth)acrylat-Maleinsäureanhydrid-Copolymere mit 0,2 bis 10 Gew.-% Maleinsäureanhydrid und 0 bis 40 Gew.-% und vorzugsweise 5 bis 40 Gew.-% Alkyl(meth)acrylat handelt.

7. Zusammensetzungen nach einem der Ansprüche 1 bis 5, worin es sich bei den Copolymeren (B2) von Ethylen und einem ungesättigten Epoxid um Copolymere von Ethylen, Alkyl(meth)acrylat und ungesättigtem Epoxid handelt, die durch Copolymerisation der Monomere erhältlich sind und 0 bis 40 Gew.-% Alkyl(meth)acrylat und bis zu 10 Gew.-% ungesättigtes Epoxid enthalten.

8. Zusammensetzungen nach einem der vorhergehenden Ansprüche, enthaltend, bezogen auf 100 Gewichtsteile, 65 bis 95 Teile Polyester auf respektive 35 bis 5 Teile Schlagzähigkeitsmodifikator.

9. Zusammensetzungen nach einem der vorhergehenden Ansprüche, worin die Gewichtsanteile von (A), (B) und (C) 15 bis 80%, 5 bis 60% bzw. 5 bis 80% betragen und (A)+(B)+(C)=100%.

10. Zusammensetzungen nach Anspruch 9, worin die Gewichtsanteile von (A), (B) und (C) 20 bis 35%, 40 bis 60% bzw. 10 bis 40% betragen und (A)+(B)+(C)=100%.

11. Zusammensetzungen nach Anspruch 9, worin die Gewichtsanteile von (A), (B) und (C) 25 bis 35%, 5 bis 10% bzw. 60 bis 70% betragen und (A)+(B)+(C)=100%.

12. Zusammensetzungen nach Anspruch 9, worin die Gewichtsanteile von (A), (B) und (C) 40 bis 75%, 10 bis 35% bzw. 10 bis 35% betragen und (A)+(B)+(C)=100%.

13. Schlagzähigkeitsmodifikatorzusammensetzungen, enthaltend:
(a) ein Kern-Schale-Copolymer (A),
(b) ein Ethylen-Copolymer (B), ausgewählt unter Copolymeren (B1) von Ethylen und einem ungesättigten Carbonsäureanhydrid, Copolymeren (B2) von Ethylen und einem ungesättigten Epoxid und Gemischen davon,
(c) ein Copolymer (C), ausgewählt unter Copolymeren (C1) von Ethylen und einem Alkyl(meth)acrylat, gegebenenfalls neutralisierten Copolymeren (C2) von Ethylen und (Meth)acrylsäure und Gemischen davon.

14. Zusammensetzungen nach Anspruch 13, worin die Anteile von (A), (B) und (C) diejenigen gemäß einem der Ansprüche 9 bis 12 sind.
